# EUROPÄISCHE PATENTSCHRIFT

(11) **EP 0 466 288 B1**
(45) Veröffentlichungstag und Bekanntmachung des Hinweises auf die Patenterteilung: **15.02.1995**
(21) Anmeldenummer: 91250167.3
(22) Anmeldetag: 24.06.1991
(51) Int. Cl.: C08F 4/70, C08F 36/04, C08F 2/02

(54) **Katalysatorsystem für die lösungsmittelfreie Polymerisation von 1,3-Dienen zu Polydienen**
Catalyst system for the polymerization in the absence of solvents of 1,3-dienes to polydienes
Système de catalyseur pour une polymérisation exempte de solvants de 1,3-diènes en polydiènes

(30) Priorität: 12.07.1990 DD 342711
(43) Veröffentlichungstag der Anmeldung: 15.01.1992
(73) Patentinhaber: BUNA GMBH, 06258 Schkopau (DE)
(72) Erfinder: Fröhlich, Hans-Otto, Prof. Dr., O-6902 Jena (DE); Klein, Wilfried, O-6900 Jena (DE); Hipler, Bernd, O-6902 Jena (DE); Göbel, Andreas, O-6900 Jena (DE); Scholz, Peter, Dr., O-6900 Jena (DE); Sammler, Marina, O-6900 Jena (DE); Kreisel, Günter, Dr., O-6900 Jena (DE); Anton, Elisabeth, Dr., O-4212 Schkopau (DE); Griehl, Volker, O-4090 Halle (DE); Stoye, Hartmut, O-4020 Halle (DE)

(56) Entgegenhaltungen:
- EP-A- 0 093 073
- US-A- 4 663 405

## Beschreibung

Die Erfindung betrifft ein Katalysatorsystem zur lösungsmittelfreien Polymerisation von 1,3-Dienen, vorzugsweise Buta(1,3)-dien, wobei Polymere vorzugsweise niederer Molmasse gebildet werden.

Methoden zur Herstellung flüssiger Polybutadiene hoher 1,4-cis-Struktur sind bereits bekannt. In der DE-OS 12192853 wird ein Verfahren zur Herstellung von flüssigen Polybutadienen mit überwiegend mittelständigen Doppelbindungen und Viskositäten von 30 bis 30 000 cP (323 k/50^{o}C) durch Polymerisation von Buta(1,3)-dien mit Mischkatalysatoren, die aus einer in organischen Solventien löslichen Nickelverbindung und Alkylaluminiumhalogeniden bestehen, beschrieben.
Lösungsmittel, in denen die Polymeristion durchgeführt wird, sind aliphatische, cycloaliphatische, aromatische sowie halogenierte Kohlenwasserstoffe. Verbindungen mit freien Elektronenpaaren finden als Molekulargewichtsregler Verwendung. Bei Molverhältnissen von Al zu Ni wie 60 : 1 erreicht man Ausbeuten um 80 % an flüssigem Polybutadien mit einer Molmasse zwischen 400 und 2200 g/Mol. Die Mikrostruktur der Polymeren wird mit etwa 80 % 1,4-cis, 19 % 1,4-trans- und 1,2 % 1,2-Strukturgehalt angegeben. Die Prozentangaben beziehen sich auf Massekonzentration. In der DE-OS 2122956 werden die gleichen Katalysatorkomponenten wie in oben genannter Offenlegungsschrift verwendet. Als Molekulargewichtsregler wird aber Ethylen in einer Menge von 0,99 bis 13,04 Gew.-%, bezogen auf die Butadien-Ethylen-Gesamtmenge, eingesetzt. In der DE-OS 2731067 wird ein Verfahren zur Herstellung von Polybutadienen mit einem hohen Gehalt an 1,4-cis-Strukturen durch Polymerisation von Buta(1,3)-dien in einem organischen Lösungsmittel bei Temperaturen von 273K/0^{o}C bis 373 K/100^{o}C und einem Druck, der ausreicht, um die Reaktionsmischung in flüssiger Phase zu halten, beschrieben. Das Katalysatorsystem besteht aus Diethylaluminiumchlorid (0,05 bis 1 Gew.-% bezogen auf Buta(1,3)-dien), Wasser (0,1 bis 0,8 Mol pro Mol Diethylaluminiumchlorid) und Cobaltoctoat und/oder Cobaltnaphtenat (0,0005 bis 0,01 Gew.-%) bezogen auf Buta(1,3)-dien.

Die DE-OS 2334267 beschreibt ein Lösungspolymerisationsverfahren zur Herstellung von flüssigem Polybutadien mit höherem 1,4-cis-Gehalt, bei dem neben verschiedenen Nickelverbindungen und Organoaluminiumverbindungen Substanzen, wie 5-Chlornorbornen, 5-Bromnorbornen, sowie Benzotrichlorid, Benzotribromid oder Propargylbromid als weitere Katalysatorkomponenten Verwendung finden. Bei all diesen Verfahren sowie bei den in den DE-OS 2715356, DE-OS 2619488, DE-OS 2815155 beschriebenen Verfahren handelt es sich um Polymerisationen des Diens in organischen Lösungsmitteln. Diese Verfahren haben somit den Nachteil, dass grössere Mengen organischer Solventien in hoher Reinheit benötigt werden und diese energieaufwendig aus den Polymerisaten entfernt und in weiteren technisch aufwendigen Prozessen vom Restmonomeren abgetrennt werden müssen, um diese wieder in den Polymerisationsprozess zurückführen zu können. Bei den in den DD-PS 256866, DD-PS 272095 und EP 0127236 beschriebenen Verfahren handelt es sich um lösungsmittelarme bzw. lösungsmittelfreie Polymerisationen; die entstehenden Produkte sind auch hoch 1,4-cis-struktur-haltig, allerdings weisen diese Molmassen über 100 000 g/Mol auf. Bei dem in der DD-PS 270307 beschriebenen Katalysatorsystem handelt es sich um ein System, das die Synthese von flüssigem Polybutadien in einem lösungsmittelfreien Verfahren gestattet. Die dort beschriebene Herstellungsweise des Katalysatorsystems ist relativ kompliziert, da die Nickelverbindung erst mit metallischem Natrium reduziert werden muss. Ausserdem ist für die Stabilität des Katalysatorsystems die Anwesenheit von Butadien zwingend notwendig.

Ziel der Erfindung ist es, die lösungsmittelfreie Polymerisation von 1,3-Dienen technisch einfacher und ökonomisch günstiger zu gestalten.

Der Erfindung liegt die Aufgabe zugrunde, ein Katalysatorsystem für eine lösungsmittelfreie Polymerisation zu entwickeln, das die Darstellung von flüssigen Polydienen mit einem hohen Anteil an 1,4-cis-Struktureinheiten ermöglicht. Erfindungsgemäss wird die Aufgabe durch ein Katalysatorsystem gelöst, welches aus
a) einer Nickelverbindung
b) einer Organoaluminiumverbindung vorzugsweise der allgemeinen Formel AlRₘXₙ (m + n = 3,
   R = aliphatischer Rest
   m ≧ 2, X = R, H, Cl, Br)
   n ≦ 1.
c) einem Alkenylhalogenid
d) einer Lewis-Base
im Molverhältnis a : b : c : d wie 1 : (20 bis 60) : (10 bis 100) : (5 bis 20) besteht.
Nickelverbindungen sind beispielsweise Nickeloctoat, -stearat, -oleat, -napthenat, oder Nickelsalze anderer Carbonsäuren, NiX₂ (X = Cl, Br, J), NiY₂ .(THF)₂(Y = Cl, Br), Bis-(acetyl-acetonato)nickel, Bis-(cyclopentadienyl)nickel.
Als Alkenylhalogenide finden vorzugsweise Vinylchlorid und Allylchlorid Verwendung. Als Lewis-Basen finden vorzugsweise Amine wie beispielsweise Anilin, Methylanilin, Dimethylanilin, Diethylanilin, Triethylamin, Dimethylformamid (DMF), Pyridin, Chinolin; Azo- oder Hydrazoverbindungen; Ether z.B. Anisol, Diethylether, Dioxan, Methyl-tert. Butylether (MTBE), Tetrahydrofuran (THF); Schwefel- oder Phosphorverbindungen Verwendung.
Die Polymerisation von 1,3-Dienen wird bei Temperaturen von 283 K/10^{o}C bis 353 K/80^{o}C und Drücken von 0,1 bis 1,0 MPa durchgeführt. Hierzu wird in einem Autoklaven beispielsweise Buta(1,3)-dien vorgelegt und anschliessend die Katalysatorkomponenten zugegeben. Nun wird weiteres Buta(1,3)-dien zudosiert und Druck und Temperatur durch gezielte Zugabe von Alkenylhalogenid und Lewis-Base im oben genannten Bereich gehalten. Bei Umsätzen zwischen 60 und 80 % wird die Reaktion durch Protolyse abgebrochen und Polybutadiene der Mikrostruktur 75 bis 85 % 1,4-cis-, 24 bis 14 % 1,4-trans- und 1 bis 2 % 1,2-Anteilen erhalten. Durch Variation der Konzentration des Alkenylhalogenides und der Lewis-Base lassen sich die Molmassen im Bereich von 500 - 10000 g/Mol und die Reaktionsgeschwindigkeit im Bereich von 10 - 240 min variieren. Dabei kommt dem Alkenylhalogenid eine Doppelfunktion zu; indem es einerseits eine bestimmte Lewis-Acidität am Aluminium einzustellen gestattet und andererseits als Molekulargewichtsregler fungiert. Durch die Kombination mit einer Lewis-Base resultiert ein synergistischer Effekt. Die nachstehend angeführten Beispiele sollen das erfindungsgemässe Verfahren erläutern ohne es in irgend einer Weise einzuschränken. %-Angaben beziehen sich auf Massekonzentration.

### Beispiel 1

In einem 2-l-Autoklaven, versehen mit Rührer, Thermostat, Druck- und Temperaturmesseinrichtung, gibt man 2,75 Mol Buta(1,3)-dien und 0,15 Mol Vinylchlorid. Der Autoklav wird auf 313 K/40^{o} erwärmt. Unter Rühren werden nun 2 mMol Ni-octoat und 104 mMol AlEt₃, beide gelöst in einem flüssigen Polybutadien der zahlenmittleren Molmasse Mn = 2000 g/Mol,η ₂₀ = 3 Pa.s, zugegeben.
Nach Anspringen der Reaktion werden im Verlauf von 10 min weitere 2,75 Mol Buta(1,3)-dien zudosiert. Innerhalb von 10 min steigt die Temperatur auf 323 K/50^{o}C und der Druck auf 0,55 mPa an. Durch Zugabe von Dioxan in Mengen von jeweils 11,7 mMol wird die Temperatur im Bereich von 323 K/50^{o}C -333 K/60^{o}C und der Druck im Bereich von 0,55 - 0,7 MPa gehalten.
Durch Gaschromatographie wird der Butadienumsatz bestimmt. Im Verlauf 1 h haben sich 70 bis 80 % der Monomerenmenge umgesetzt. Die Reaktionsmischung wird nun mit 50 ml 3 n wässriger NaOH zersetzt. Das entweichende Butadien wird aufgefangen und über Molsieb getrocknet. Nach 3-maligem Behandeln mit 3 n NaOH und Neutralwaschen wird das flüssige Polybutadien im Vakuumtrockenschrank getrocknet. Das Polymere stellt ein gelblich gefärbtes öl mit einer zahlenmittleren Molmasse von 1958 g/Mol, einer Viskosität η ₂₀ = 1,82 Pa.s und 80 % 1,4-cis-, 18 % 1,4-trans- und 2 % 1,2-Gehalt dar.

### Beispiel 2

In einen 2-l-Autoklaven, versehen mit Rührer, Thermostat, Druck- und Temperaturmesseinrichtung gibt man 2,75 Mol Buta(1,3)-dien und 0,05 Mol Vinylchlorid. Der Autoklav wird auf 313 K/40^{o}C erwärmt. UnterRühren werden nun 1 mMol Ni-octoat und 52 mMol AlEt₃, beide im in Beispiel 1 beschriebenen Polybutadien gelöst, zugegeben. Nach Anspringen der Reaktion werden nun im Verlauf von 10 min weitere 2,75 Mol Buta(1,3)-dien zudosiert. Nach etwa 10 min erreicht die Temperatur 328 K/55^{o}C und der Druck 0,6 MPa. Durch Zugabe von Dioxan in Mengen von jeweils 11,7 mMol wird die Temperatur im Bereich von 323 K/50^{o}C bis 333 K/60^{o}C und der Druck im Bereich von 0,55 bis 0,7 MPa gehalten. Durch Gaschromatographie wird der Umsatz an Monomeren bestimmt. Nach 1 h ist die Reaktion beendet und es wird weiter wie im Beispiel 1 beschrieben aufgearbeitet. Es resultiert ein Polybutadien der zahlenmittleren Molmasse von 2953 g/Mol, einer Viskosität η ₂₀ = 4,1 Pa.s und 82 % 1,4-cis-, 17 % 1,4-trans- und 1 % 1,2-Gehalt.

### Beispiel 3 (Vergleichsbeispiel)

Ein nach Beispiel 1 unter gleichen Startbedingungen durchgeführter Versuch, der aber ohne Zusatz von Vinylchlorid abläuft, führt selbst nach einer Reaktionszeit von 4 h nicht zu einem merklichen Umsatz an Buta(1,3)dien zu (Polybutadien.

### Beispiel 4 (Vergleichsbeispiel)

Ein nach Beispiel 1 unter gleichen Startbedingungen durchgeführter Versuch mit Vinylchlorid, der ohne Zustz von Dioxan abläuft, führt nacht 5 bis 10 min zu plötzlichem Temperaturanstieg bis auf 393 K/120°C und Druckanstieg bis zu 1,1 MPa und muss, um ein Durchgehen der Reaktion zu vermeiden, mit NaOH abgebrochen werden.

## Patentansprüche

1. Katalysatorsystem zur lösungsmittelfreien Polymerisation von 1,3-Dienen zu Polydienen, gekennzeichnet dadurch, dass das Katalysatorsystem aus
a) einer Nickelverbindung
b) einer Organoaluminiumverbindung
c) einem Alkenylhalogenid
d) einer Lewis-Base
im Molverhältnis a:b : c:d wie 1 :(20 bis 60) : (10 bis 100) : (5 bis 20) besteht.

2. Katalysatorsystem nach Anspruch 1, gekennzeichnet dadurch, dass die Nickelverbindung vorzugsweise Nickeloctoat, -stearat, -oleat, -naphtenat oder Nickelsalze anderer Carbonsäuren, NiX₂(X =Cl, Br, J), NiY₂.(THF)₂ (Y = Cl, Br), Bis(acetylacetonato)-nickel, Bis(cyclopentadienyl)-nickel ist.

3. Katalysatorsystem nach Anspruch 1, gekennzeichnet dadurch, dass die Organoaluminiumverbindung vorzugsweise eine Verbindung des Typs AlRₘXₙ (m + n = 3,
R = aliphat. Rest,
m ≧ 2 X = R, H, Cl, Br)
n ≦ 1
ist.

4. Katalysatorsystem nach Anspruch 1, gekennzeichnet dadurch, dass das Alkenylhalogenid vorzugsweise Vinylchlorid oder Allylchlorid ist.

5. Katalysatorsystem nach Anspruch 1, gekennzeichnet dadurch, dass die Lewis-Base Amine wie beispielsweise Anilin, Methyl-, Dimethyl-, Diethylanilin, Triethylamin, DMF, Chinolin, Pyridin, Azo- oder Hydrazoverbindungen, Ether wie beispielsweise THF, Diethylether, Dioxan, Anisol, MTBE; Schwefel oder Phosphorverbindungen sind.

## Claims

1. Catalyst system for solvent-free polymerization of 1,3-dienes to polydienes, characterized in that the catalyst system consists of
a) a nickel compound,
b) an organoaluminium compound,
c) an alkenylhalogenide,
d) a Lewis base
at a molar ratio a:b : c:d as 1 : (20 to 60) : (10 to 100) : ( 5 to 20).

2. Catalyst system as claimed in claim 1 wherein the nickel compound is preferably nickel octoate, stearate, oleate, naphtenate or nickel salts of different carbon acids, NiX₂ (X = Cl, Br, J), NiY₂ . (THF)₂ (Y = Cl, Br), Bis(acetylacetonato)-nickel, Bis(cyclopentadienyl)-nickel.

3. Catalyst system as claimed in claim 1 wherein the organoaluminium compound is preferably a compound of type AlRₘXₙ (m + n = 3,
R = aliphatic group,
m ≧ 2 X = R, H, Cl, Br
n ≦ 1

4. Catalyst system as claimed in claim 1 wherein the alkenylhalogenide is preferably vinyl chloride or allylchloride.

5. Catalyst system as claimed in claim 1 wherein the Lewis base consists of amines as e. g. aniline, methylaniline, dimethylaniline, diethylaniline, triethylamine, dimethyl formamide, quinoline, pyridine, azo links or hydrazo links, consists of ethers as e. g. tetrahydrofuran, diethylether,, dioxane, anisol, methyl-tert.butylether, sulphur or phosphoric compounds.

## Revendications

1. Système de catalyseur pour la polymérisation sans solvant de 1,3-diènes pour donner le polydiène, caractérisé en ceci que
le système de catalyseur est constitué
a) d'un composé de nickel
b) d'un composé organométallique d'aluminium
c) d'un halogénure alkène
d) d'une base de Lewis
dans le rapport molaire a:b : c:d équivalent à 1 :(20 à 60) : (10 à 100) : (5 à 20).

2. Système de catalyseur selon la revendication 1, caractérisé par le fait que le composé de nickel est préférentiellement l'octoate de nickel, le stéréate de nickel, l'oléate de nickel, le naphténate de nickel ou les sels de nickel d'autres acides carboxyliques, NiX₂ (X = Cl, Br, J), NiY₂.(THF)₂ (Y = Cl, Br), di(acétylacétonate)-nickel, di(cyclopentadiène)-nickel.

3. Système de catalyseur selon la revendication 1,
caractérisé par le fait que le composé organométallique d'aluminium est préférentiellement un composé du type A1RₘXₙ (m + n = 3,
R = reste aliphatique,
m ≧ 2 x = R, H, Cl, Br)
n≦ 1.

4. Système de catalyseur selon la revendication 1, caractérisé par le fait que l'halogénure alkène est préférentiellement le chlorure de vinyle ou le chlorure d'allyle.

5. Système de catalyseur selon la revendication 1 caractérisé par le fait que la base de Lewis
est une amine, par exemple aniline, méthylamine, diméthylaniline, diéthylanyline, triéthylamine, diméthylformamide, quinoléine, pyridine, composé azoïque ou hydrazoïque, éther, par exemple tétrahydrofuranne, éther diéthylique, dioxanne, anisol, tertiobutylméthyl éther, soufre ou composés phosphorés.
